# EUROPÄISCHE PATENTSCHRIFT

(11) **EP 0 414 084 B1**
(45) Veröffentlichungstag und Bekanntmachung des Hinweises auf die Patenterteilung: **22.09.1993**
(21) Anmeldenummer: 90115465.8
(22) Anmeldetag: 11.08.1990
(51) Int. Cl.: A61C 9/00

(54) **Vorrichtung zum Aufsprühen einer zahnärztlichen Abformmasse**
Device for spraying of a dental moulding material
Dispositif pour l'injection de produits destinés à la prise d'empreintes dentaires

(30) Priorität: 25.08.1989 DE 3928156
(43) Veröffentlichungstag der Anmeldung: 27.02.1991
(73) Patentinhaber: BAYER AG, 51368 Leverkusen (DE)
(72) Erfinder: Schulz, Hans Hermann, D-5000 Köln 80 (DE); Jonischkeit, Horst, D-7200 Tuttlingen (DE)

(56) Entgegenhaltungen:
- EP-A- 0 296 347
- WO-A-89/09170
- DE-U- 8 810 305
- US-A- 1 804 589

## Beschreibung

Die Erfindung betrifft eine Vorrichtung zum Aufsprühen von Dental-Abformmassen, bestehend aus einem zylindrischen Handstück mit einer darin befindlichen Kartusche zur Bereitstellung der Abformmasse, einem mittels Bajonettoder Schraubverschluß auf das Handstück aufsetzbaren, gekrümmten und konisch auslaufenden Kopfstück mit einem ebenfalls konisch auslaufenden Rohrquerschnitt und einer am Kopfstück angeordneten, als Zweistoffdüse ausgebildeten Sprühdüse.

Ein zahnärztliches Instrument dieser Art ist in US-A-4 264 305 beschrieben. Die Abformmasse wird hier durch einen pistolenähnlichen Griff, der einen Kolben in axialer Richtung verschiebt, aus einer Kartusche heraus in eine Zweistoffdüse gefördert und mittels Druckluft versprüht. Druckluft und Materialförderung können getrennt manipuliert werden Das Gerät erfordert eine Vielzahl mechanischer Bauelemente und ist verhältnismäßig kompliziert aufgebaut. Dadurch wird die Reinigung und Sterilisation erschwert. Aus wirtschaftlichen Gründen (niedrigere Fertigungskosten) besteht auch eine Tendenz, auf spritzgußtechnisch gefertigte Kunststoffbauteile zurückzugreifen, soweit dies arbeitshygienischen Anforderungen nicht entgegensteht. Da Kunststoffbauteile nicht in einem Autoklaven sterilisiert werden können, müssen solche Teile im Sinne einer Einmalverwendung konzipiert werden.

Der Erfindung liegt daher die Aufgabe zugrunde, ein Instrument zum Aufsprühen einer viskosen Zahnabformmasse zu entwickeln, das unter ergonomischen Gesichtspunkten leicht zu handhaben ist, dessen Konstruktionsprinzip und Materialauswahl niedrige Herstellungskosten erlauben und das gleichzeitig größtmögliche Arbeitshygiene und Sicherheit bietet.

Diese Aufgabe wird, wie oben schon beschrieben, mit einem Instrument gelöst, das aus einem zylindrischen Handstück mit einer darin befindlichen Kartusche, einem auf das Handstück aufsetzbaren, gekrümmten und konisch auslaufenden Kopfstück mit einem ebenfalls konisch auslaufenden Rohrquerschnitt und einer am Kopfstück angeordneten, als Zweistoffdüse ausgebildeten Sprühdüse besteht. Den oben erwähnten Anforderungen wird erfindungsgemäß dadurch Rechnung getragen, daß die Abformmassen-Zuführung zur Sprühdüse aus einem elastischen Schlauchstück besteht, an dessen vorderem (distalem) Ende ein kegelförmiger oder pyramidenförmiger, Luftaustrittsöffnungen aufweisender Düsenkörper angeordnet ist, dessen Basisflächen-Durchmesser größer ist als der kleinste Durchmesser des konischen Rohrquerschnitts, und daß die Länge des elastischen Schlauchstücks so bemessen ist, daß es beim Aufsetzen des Kopfstückes geringfügig gestaucht wird, so daß die Düsenkörperbasisfläche mit ihrem Außenumfang an die konische Innenkontur des Kopfstückes gedrückt wird und dadurch im Kopfstück fixiert wird. Die Zweistoffdüse wird also durch den konisch auslaufenden Rohrquerschnitt im Kopfstück und den darin eingeklemmten kegelförmigen oder pyramidenförmigen Düsenkörper gebildet, wobei die zum Betrieb erforderliche Luft (oder auch ein anderes gasförmiges Medium) mit hoher Geschwindigkeit durch Luftaustrittsöffnungen zwischen Düsenkörper und der Innenkontur des konisch auslaufenden Rohrquerschnitts und anschließend über die Oberfläche des Düsenkörpers strömt.Zu diesem Zweck ist der konische Rohrquerschnitt bei aufgesetztem Kopfstück vorteilhaft mit einem Luftzuführungskanal im zylindrischen Handstück verbunden.

Vorzugsweise ist das Schlauchstück an seinem hinteren (proximalen) Ende mit einer zur Kartusche hin abdichtenden Flanschverbindung versehen. Dieser Flansch stellt die Verbindung zwischen dem Schlauchstück und dem Kartuschenvolumen her.

Die Kartusche weist vorteilhaft eine Entlüftungsöffnung auf, die zweckmäßig durch die Flanschverbindung hindurchgeführt ist. Dadurch wird sichergestellt, daß beim Betrieb des Instruments kein Unterdruck in der Kartusche entstehen kann.

Gemäß einer Weiterentwicklung besteht die Kartusche mit dem angesetzten Schlauchstück aus einem einstückigen Kunststoffspritzgußteil.

Eine weitere Variante der Erfindung besteht darin, daß das Schlauchstück selbst als Kartusche ausgebildet ist und bereits vorkonfektioniert den für die Sprühbehandlung erforderlichen Abfüllmassevorrat enthält. In diesem Fall kann auf die großvolumige Vorratskartusche im zylindrischen Handstück verzichtet werden.

Zum Aufsprühen einer Zahnabformmasse wird die Kartusche mit einer handelsüblichen Zahnabformmasse gefüllt. Dabei kommen allerdings nur überwiegend niederviskose Materialien in Betracht, die in der Zweistoffdüse hinreichend feine Tröpfchen bilden und in dieser Hinsicht für einen Sprüh- bzw Zerstäubungsvorgang physikalisch geeignet sind.

Insbesondere muß vermieden werden, daß in der Zweistoffdüse ein ungleichmäßiger Abriß des Materials erfolgt und im Sprühstrahl Materialanhäufungen bzw. Klumpen auftreten.

Es hat sich herausgestellt, daß man diesen Nachteil vermeiden kann, wenn gemäß einer bevorzugten Ausführungsform der Erfindung die Zahnabformmasse von einer niedrigviskosen, additionsvernetzenden Siliconabformmasse gebildet wird, bei der durch Eindampfen die Siliconkomponenten von flüchtigen Bestandteilen weitgehend befreit sind und bei welcher gefällte oder pyrogen hergestellte Kieselsäure in vinylendgestoppte Polysiloxane eingearbeitet ist. Selbst dünne, aufgesprühte Filme aus einem Abformmaterial dieser Zusammensetzung weisen eine hohe Zugfestigkeit und Reißdehnung auf. Außerdem werden Dimensionsänderungen bei der Vernetzung des Materials; z.B. Schrumpfungen, minimiert.

Mit der Erfindung werden folgende Vorteile erzielt:
- Das Sprühinstrument besteht aus maximal fünf Bauteilen und läßt sich preisgünstig herstellen. Bei den Varianten, bei denen das Schlauchstück und die Kartusche ein integrales Bauelement bilden oder das Schlauchstück selbst als Kartusche dient, werden sogar nur drei Bauelemente benötigt.
- Sofern Kopf- und Handstück aus Metall gefertigt sind, kann das Instrument bequem in einem Autoklaven sterilisiert werden. Zu diesem Zweck ist das Schlauchstück mit dem Düsenkörper und gegebenenfalls der Flanschverbindung nur zur einmaligen Verwendung bestimmt; d. h., bei jeder Behandlung eines Patienten wird ein neues Schlauchstück in das Kopfstück eingesetzt.
- Das Gerät ist von verhältnismäßig geringem Gewicht und bietet eine ergonomisch gute Handhabung. Zur Versorgung mit Druckluft wird das Gerät über eine entsprechende Kupplung an seinem hinteren (proximalen) Ende an eine in der zahnärztlichen Praxis ohnehin vorhandene Druckluftquelle mit Fußschalter angeschlossen.
- Der Materialfluß von der Kartusche in die Zweistoffdüse erfolgt einzig und allein aufgrund der Ejektorwirkung an der Zweistoffdüse; d.h., in der Zweistoffdüse wird die Abformmasse durch das Schlauchstück aus der Kartusche angesaugt. Bei den bisher bekannten Abformmasse-Sprühgeräten bzw. -Spritzen mußte das Material durch einen in der Kartusche verschiebbaren Kolben zur Düse hin extrudiert werden.
- Bei Verwendung niedrigviskoser, additionsvernetzender Siliconabformmassen, bei denen die flüchtigen Anteile der Siliconkomponenten reduziert wurden und denen ein Silicon-Kieselsäure-Compound zugesetzt wurde, lassen sich sehr feine und gleichmäßige Sprühfilme mit geringsten Dimensionsänderungen und guten Reißfestigkeiten erzielen, was für die einwandfreie Adaption des Materials an die Zahnhartsubstanz Voraussetzung ist.

Im folgenden wird ein Ausführungsbeispiel der Erfindung näher erläutert. Es zeigen:
- Fig. 1: einen Längsschnitt durch das Sprühinstrument,
- Fig. 2: das Kopfstück des Instruments mit der zugehörigen Zweistoffdüse.

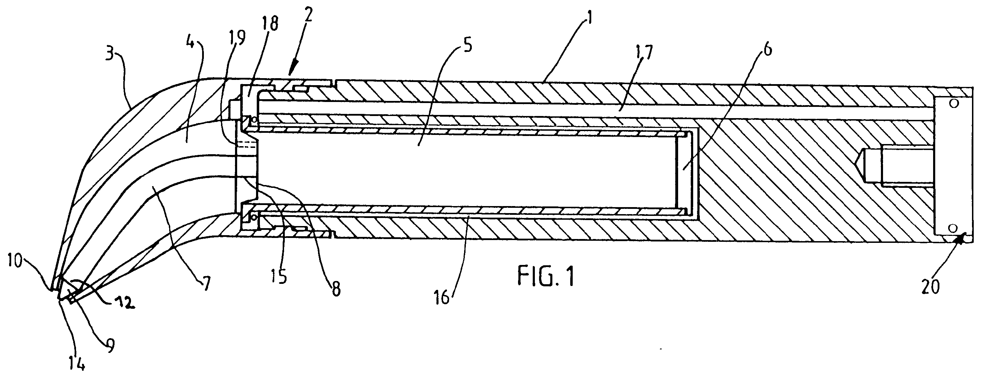

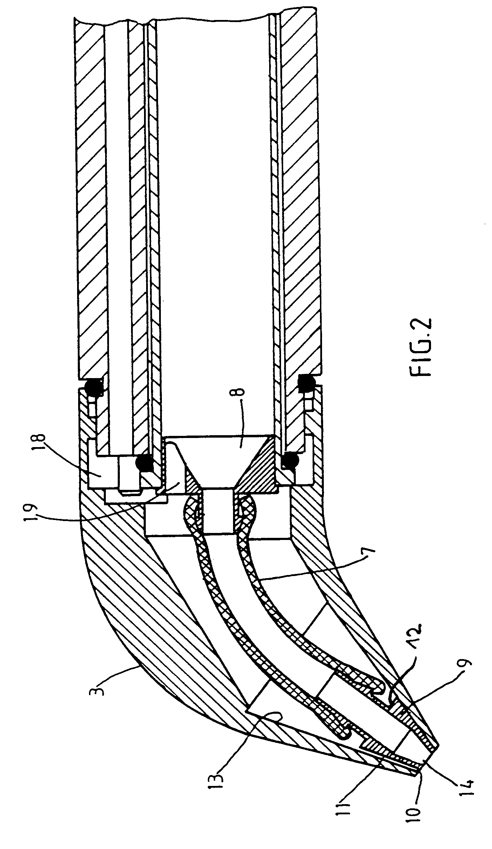

Gemäß Fig. 1 ist auf ein zylindrisches Handstück 1 mittels eines Bajonettverschlusses 2 ein konisch auslaufendes, gekrümmtes bzw. abgewinkeltes Kopfstück 3 aufgesetzt, das einen ebenfalls konisch auslaufenden Rohrquerschnitt 4 hat. Im Inneren des Handstücks 1 befindet sich eine Kammer für die Aufnahme einer Kartusche 5, die mit einer Zahnabformmasse gefüllt wird. Die Kartusche 5 ist an ihrem hinteren (proximalen) Ende mit einer Abschlußkappe 6 versehen. Am vorderen (distalen) Ende der Kartusche 5 ist ein elastisches Schlauchstück 7 angeflanscht (Flanschverbindung 8). Das Schlauchstück 7 weist an seinem vorderen (distalen) Ende einen Düsenkörper 9 auf, der zusammen mit der Mündung 10 des Kopfstücks 3 eine Zweistoffdüse bildet. Der Düsenkörper 9 hat die Form eines Kegel- oder Pyramidenstumpfes, wobei sich die Querschnittsfläche nach außen hin verjüngt (siehe auch Fig. 2).

Wie aus Fig. 2 ersichtlich, sind in den Düsenkörper 9, gleichmäßig über die Mantelfläche verteilt, bei einem kegelförmigen Profil Luftaustrittskanale 11 eingefräst. Bei einem pyramidenförmigen Querschnitt des Düsenkörpers 9 verbleiben zwischen der Peripherie der Düsenkörperbasisfläche 12 und der Innenkontur 13 des Kopfstücks 3 segmentförmige Luftaustrittsöffnungen (11). In beiden Fällen strömt die dem konischen Rohrquerschnitt 4 zugeführte Druckluft durch die Luftaustrittsöffnungen 11 über die Oberfläche des Düsenkörpers 9 zur Düsenöffnung 14.

Bei aufgesetztem Kopfstück 3 wird der konisch ausgeführte Flansch 8 an die Kartusche 5 angepreßt, so daß eine abdichtende Verbindung des Schlauchstückes 7 mit dem Kartuschenvolumen sichergestellt ist. Das in der Kartusche 5 befindliche Abformmaterial kann durch eine Bohrung 15 im Flansch 8 in das Schlauchstück 7 eintreten.

Das Schlauchstück 7 besteht aus einem elastischen Material und ist in der Länge so bemessen, daß es beim Aufsetzen des Kopfstückes geringfügig gestaucht wird. Die Länge des Schlauchstückes 7 ist also etwas größer (5 % bis 10 %) als die kürzeste Verbindung zwischen der Auflagestelle A des Düsenkörpers 9 an der Innenkontur 13 des Kopfstückes und der Mündung der Bohrung 15 im Flansch 8 am anderen Ende. Aufgrund der elastischen, einer Auswölbung des Schlauchstückes 7 entgegenwirkenden Rückstellkraft wird die Düsenkörperbasisfläche 12 mit ihrem Außenumfang an die konische Innenkontur 13 des Kopfstückes 3 gedrückt, wodurch der Düsenkörper 9 im konisch auslaufenden Rohrquerschnitt 4 fixiert wird. Voraussetzung ist dabei, daß der Durchmesser der Düsenkörperbasisfläche 12 größer ist als der Mündungsquerschnitt des Kopfstückes 3 am vorderen Ende und daß die Steigung (Konizität) des Düsenkörpers 9 mit der Steigung des konisch auslaufenden Rohrquerschnitts 4 am Mündungsquerschnitt 10 übereinstimmt (siehe Fig. 2). Gleichzeitig erfolgt dabei eine reproduzierbare, paßgenaue Zentrierung des Düsenkörpers 9 im Rohrquerschnitt. In der Praxis werden die Abmessungen so gewählt, daß die Düsenöffnung 14 etwa in der gleichen Ebene liegt wie der Mündungsquerschnitt 10 des Kopfstücks 3.

Aufgrund der Sogwirkung der über die Düsenkörperoberfläche hinwegströmenden Luft wird das im Schlauchstück 7 befindliche Abformmaterial angesaugt und tritt an der Düsenöffnung 14 aus. Dort wird es von dem Luftstrom erfaßt und in kleine Tröpfchen zerteilt (Sprüheffekt). Die erforderliche Druckluft gelangt durch einen Luftzuführungskanal 17 im Handstück 1 und eine Durchtrittsöffnung 18 in den konischen Rohrquerschnitt 4. Um zu verhindern, daß bei einem Materialaustritt aus der Kartusche 5 ein den weiteren Materialfluß hemmender Unterdruck aufgebaut wird, ist im Flansch 8 eine Entlüftungsöffnung 19 angeordnet.

Das Schlauchstück 7 wird zusammen mit dem Düsenkörper 9 an dem Flansch 8 zweckmäßig als Spritzgußformteil aus einem geeigneten Thermoplast, z.B Polycarbonat, hergestellt. Damit sind die Herstellungskosten so niedrig, daß für dieses Bauteil lediglich eine Einmalverwendung in Betracht zu ziehen ist; d.h., das Schlauchstück 7 wird mit dem Düsenkörper 9 und dem Flansch 8 als Wegwerfbauteil konzipiert.

Gemäß einer alternativen Ausführung kann auch die Kartusche 5 zusammen mit dem Schlauchstück 7 und dem Düsenkörper 9 als einstückiges, integrales Kunststoffspritzgußteil hergestellt werden. Eine weitere Senkung der Fertigungs- und Materialkosten ist möglich, wenn auf die Kartusche 5 ganz verzichtet wird und stattdessen das Schlauchstück 7 als alleiniges Vorratsvolumen für die Abformmasse verwendet wird. Der Flansch 8 oder ein ähnlicher Ansatz dient dann nur zur Halterung des Schlauchstücks 7 im Handstück 1, wenn das Kopfstück 3 aufgesetzt wird. Diese Variante bietet sich an, wenn das Instrument relativ selten benutzt wird und nur sehr geringe Abformmaterialmengen benötigt werden.

Zum Betrieb des Instrumentes wird das Handstück 1 mittels einer handelsüblichen Steckkupplung 20 an einen Druckluftschlauch angeschlossen. Dabei wird gleichzeitig die Verbindung des Luftzuführungskanals 17 mit der Druckluftquelle hergestellt. Der Luftzuführungskanal 17 ist hier in Form einer langen, achsenparallelen Bohrung durch die Gehäusewand des Handstückes 1 ausgeführt. Anstelle dieser langen Bohrung kann die Luftzuführung auch durch den die Kartusche 5 umschließenden Ringspalt erfolgen. In diesem Falle muß der Ringraum um die Kartusche 5 etwas größer sein. Gegebenenfalls müssen auch zusätzliche Vorkehrungen für eine Halterung der Kartusche 5 im Handstück 1 getroffen werden.

Ein typischer Abformprozeß unter Verwendung des neuen Sprühinstruments läuft in folgender Weise ab:
a) Vorbereitung des abzuformenden Gebietes und Auswahl eines geeignetes Abdrucklöffels.
b) Einfüllen der Abformmasse in die Kartusche 5.
c) Einlegen der Kartusche 5 in das Handstück 1.
d) Einsetzen des Schlauchstückes 7 mit dem zugehörigen Flansch 8 in die Kartusche 5.
e) Überstülpen des Kopfstückes 3 über das Schlauchstück 7 und Verriegeln des Kopfstückes 3 mittels Bajonettverschluß 2 am Handstück 1, wobei sich das Schlauchstück 7 mit dem Düsenkörper 9 in Richtung der Mündung 10 des Rohrstücks 3 schiebt und dort festklemmt; außerdem Fixierung des Flansches 8 an der Kartusche 5.
f) Anschluß des Instruments an eine Druckluftquelle mittels der Steckkupplung 20.
g) Aufsprühen einer dünnen Formmasseschicht auf den abzuformenden Bereich der Zahnhartsubstanz und Schleimhaut durch Freigabe der Druckluftquelle, z.B. mittels Fußschalter.
h) Einfüllen von weiterer Abformmasse in den Abdrucklöffel und Aufsetzen des Abdrucklöffels zur eigentlichen Abformung.

Es wurde gefunden, daß unter der Vielzahl der bekannten Zusammensetzungen von Abformmaterialien für einen selbstansaugenden Sprühprozeß, wie er oben beschrieben wurde, sehr niedrigviskose, additionsvernetzende Siliconabformmassen besonders geeignet sind. Durch Verwendung von Siliconkomponenten, bei denen die flüchtigen Anteile auf maximal 1,5 %, vorzugsweise 0,8 %, mittels Dünnschicht- oder Fallfilmverdampfer reduziert werden, ergeben sich sehr niedrige Dimensionsänderungswerte. Dies wird in DE 34 10 646 näher beschrieben.

Andererseits kann durch den Einsatz eines Silicon-Kieselsäure-Compounds, wie in DE 34 23 823 beschrieben, die Reißfestigkeit der aus niedrigviskosen Siliconkomponenten hergestellten Abformmassen verbessert werden, ohne daß die Viskosität der Abformmassen wesentlich erhöht wird.

Das Handstück 1 und das Kopfstück 3 werden zweckmäßig aus Metall gefertigt. Die Kartusche 5 kann aus Metall oder Kunststoff bestehen. Das Schlauchstück 7 mit dem Düsenkörper 9 und dem Flansch 8 ist für eine Einmalverwendung konzipiert und besteht aus einem thermoplastischen Kunststoff, z.B. Polycarbonat, der auch für die notwendige Elastizität des Schlauchstückes 7 sorgt. Das Instrument kann, wenn Kartusche 5 und Schlauchstück 7 herausgenommen sind, bequem in einem Autoklaven sterilisiert werden.

## Patentansprüche

1. Vorrichtung zum Aufsprühen von Dental-Abformmassen, bestehend aus einem zylindrischen Handstück (1) mit einer darin befindlichen Kartusche (5) zur Bereitstellung der Abformmasse, einem mittels Bajonettoder Schraubverschluß (2) auf das Handstück (1) aufsetzbaren, gekrümmten und konisch auslaufenden Kopfstück (3) mit einem ebenfalls konisch auslaufenden Rohrquerschnitt (4) und einer am Kopfstück (3) angeordneten, als Zweistoffdüse ausgebildeten Sprühdüse (9, 10, 14), dadurch gekennzeichnet, daß die Abformmassenzuführung zur Sprühdüse (9, 10, 14) aus einem elastischen Schlauchstück (7) besteht, an dessen vorderem (distalem) Ende ein kegelförmiger oder pyramidenförmiger, Luftaustrittsöffnungen (11) aufweisender Düsenkörper (9) angeordnet ist, dessen Basisflächen-Durchmesser größer ist als der kleinste Durchmesser des konischen Rohrquerschnitts (4), und daß die Länge des elastischen Schlauchstücks (7) so bemessen ist, daß es beim Aufsetzen des Kopfstückes (3) geringfügig gestaucht wird, so daß die Düsenkörperbasisfläche (12) mit ihrem Außenumfang an die konische Innenkontur (4) des Kopfstückes (3) gedrückt wird.

2. Vorrichtung nach Anspruch 1, dadurch gekennzeichnet, daß der konische Rohrquerschnitt (4) bei aufgesetztem Kopfstück (3) mit einem Luftzuführungskanal (17) im Handstück (1) verbunden ist.

3. Vorrichtung nach Anspruch 1 und 2, dadurch gekennzeichnet, daß das Schlauchstück (7) an seinem hinteren (proximalen) Ende mit einer zur Kartusche (5) hin abdichtenden Flanschverbindung (8) versehen ist.

4. Vorrichtung nach Anspruch 1 bis 3, dadurch gekennzeichnet, daß die Kartusche (5) eine Entlüftungsöffnung (19) aufweist.

5. Vorrichtung nach Anspruch 3 und 4, dadurch gekennzeichnet, daß die Entlüfungsöffnung (19) durch die Flanschverbindung (8) hindurchgeführt ist.

6. Vorrichtung nach Anspruch 1, dadurch gekennzeichnet, daß die Kartusche (5) mit dem angesetzten Schlauchstück (7) ein einstückiges Kunststoffspritzgußteil ist.

7. Vorrichtung nach Anspruch 1, dadurch gekennzeichnet, daß das Schlauchstück (7) als Kartusche ausgebildet ist.

8. Vorrichtung nach den Ansprüchen 1 bis 7, dadurch gekennzeichnet, daß die Zahnabformmasse von einer niedrigviskosen, additionsvernetzenden Siliconabformmasse gebildet wird, bei der durch Eindampfung die Siliconkomponenten von flüchtigen Bestandteilen weitgehend befreit sind und bei welcher gefällte oder pyrogen hergestellte Kieselsäure in vinylendgestoppte Polysiloxane eingearbeitet ist.

## Claims

1. Device for spraying on dental impression compounds, consisting of a cylindrical handpiece (1) with a cartridge (5), situated inside it, for the provision of the impression compound, a curved and conically tapering headpiece (3), which can be mounted on the handpiece (1) by means of a bayonet joint or screw joint (2) and has a likewise conically tapering tubular cross-section (4), and a spray nozzle (9, 10, 14) which is arranged on the headpiece (3) and designed as a two-fluid nozzle, characterized in that the supply of the impression compound to the spray nozzle (9, 10, 14) consists of an elastic hosepiece (7), at the front (distal) end of which a conical or pyramidal nozzle member (9) is arranged, which has air escape openings (11) and the base diameter of which is greater than the smallest diameter of the conical tubular cross-section (4), and in that the length of the elastic hosepiece (7) is dimensioned in such a manner that it is slightly compressed when the headpiece (3) is mounted, so that the nozzle member base (12) is pressed with its external periphery against the conical internal contour (13) of the headpiece (3).

2. Device according to Claim 1, characterized in that, with the headpiece (3) mounted, the conical tubular cross-section (4) is connected to an air supply channel (17) in the handpiece (1).

3. Device according to Claims 1 and 2, characterized in that, at its rear (proximal) end, the hosepiece (7) is provided with a flange connection (8) which ensures sealing up to the cartridge (5).

4. Device according to Claims 1 and 3, characterized in that the cartridge (5) has a vent hole (19).

5. Device according to Claims 3 and 4, characterized in that the vent hole (19) is conducted through the flange connection (8).

6. Device according to Claim 1, characterized in that the cartridge (5) with the attached hosepiece (7) is a one-piece injection-moulded plastic part.

7. Device according to Claim 1, characterized in that the hosepiece (7) is designed as a cartridge.

8. Device according to Claims 1 to 7, characterized in that the dental impression compound is formed by a low-viscosity, addition-crosslinking silicone impression compound, in which the silicone components are extensively freed of volatile ingredients by evaporation and in which precipitated or pyrogenically prepared silicic acid is incorporated into vinyl-terminated polysiloxanes.

## Revendications

1. Dispositif de projection de masses de moulage dentaire, constitué d'une poignée cylindrique (1) dans laquelle se trouve une cartouche (5) fournissant la masse de moulage, une pièce de tête (3) incurvée et se terminant en forme de cône pouvant être montée sur la poignée (1) au moyen d'un assemblage à baïonnette ou à vis (2), avec une section de tube (4) se terminant également en forme de cône et une tuyère de projection (9, 10, 14) montée sur la pièce de tête (3) et se présentant sous forme d'une tuyère à deux composants, caractérisé en ce que l'alimentation de la masse de moulage vers la tuyère de projection (9, 10, 14) est assurée par un élément de flexible élastique (7), à l'extrémité antérieure (distale) duquel est monté un corps de tuyère (9) en forme de cône ou de pyramide présentant des orifices de sortie d'air (11) dont le diamètre de la surface de base est plus grand que le plus petit diamètre de la section de tube conique (4) et en ce que la longueur de l'élément de flexible élastique (7) est choisie de façon que celui-ci soit légèrement écrasé au montage de la pièce de tête (3), si bien que la surface de base du corps de tuyère (12) est pressée par sa périphérie extérieure sur le profil intérieur conique (4) de la pièce de tête (3).

2. Dispositif selon la revendication 1,
caractérisé en ce que la section de tube conique (4) est connectée à un conduit d'adduction d'air (17) dans la poignée (1) lorsque la pièce de tête (3) est montée.

3. Dispositif selon les revendications 1 et 2, caractérisé en ce que l'élément de flexible (7) est pourvu, à son extrémité postérieure (proximale) d'un joint à bride (8) assurant l'étanchéité par rapport à la cartouche (5).

4. Dispositif selon les revendications 1 à 3, caractérisé en ce que la cartouche (5) comporte un orifice de mise à l'air (19).

5. Dispositif selon les revendications 3 et 4, caractérisé en ce que l'orifice de mise à l'air (19) traverse le joint à bride (8).

6. Dispositif selon la revendication 1,
caractérisé en ce que la cartouche (5) et l'élément de flexible (7) monté sur celle-ci sont formés d'une seule pièce de matière plastique coulée sous pression.

7. Dispositif selon la revendication 1,
caractérisé en ce que l'élément de flexible (7) joue le rôle de cartouche.

8. Dispositif selon les revendications 1 à 7, caractérisé en ce que la masse de moulage dentaire est formée d'une masse de moulage de silicone de faible viscosité réticulée par additif, dans laquelle les constituants volatils ont été éliminés dans une large mesure des composants de silicone et dans laquelle de l'acide silicique précipité ou d'origine pyrogène est incorporé au polysiloxane avec groupes vinyle terminaux.
